# EUROPEAN PATENT SPECIFICATION

(11) **EP 1 227 264 B1**
(45) Date of publication and mention of the grant of the patent: **08.10.2003**
(21) Application number: 02001752.1
(22) Date of filing: 25.01.2002
(51) Int. Cl.: F16H 7/08

(54) **Hydraulic tensioner with ratchet**
Hydraulische Spannvorrichtung mit Sperrklinke
Tendeur hydraulique avec verrouillage à cliquet

(30) Priority: 25.01.2001 JP 2001017166
(43) Date of publication of application: 31.07.2002
(73) Proprietor: Tsubakimoto Chain Co., Osaka 530-0018, (JP)
(72) Inventor: Kurohata, Junya, c/o Tsubakimoto Chain Co., Kita-Ku,Osaka 530-0018 (JP); Suzuki, Tadasu, c/o Tsubakimoto Chain Co., Kita-ku,Osaka 530-0018 (JP)
(74) Representative: Patentanwälte Hosenthien-Held und Dr. Held

(56) References cited:
- US-A- 4 874 352
- US-A- 5 304 099
- US-A- 5 720 684
- US-A- 5 931 754

## Description

The present invention relates to a ratchet-operated tensioner used for imparting proper tension to a timing chain and a timing belt of a vehicle engine or a transmission chain and a belt of a drive or the like, and specifically relates to a ratchet-operated tensioner with a pressure oil chamber in which the leak of oil from a pressure oil chamber provided for obtaining the damper effect by an oil pressure during engine shutdown is suppressed.

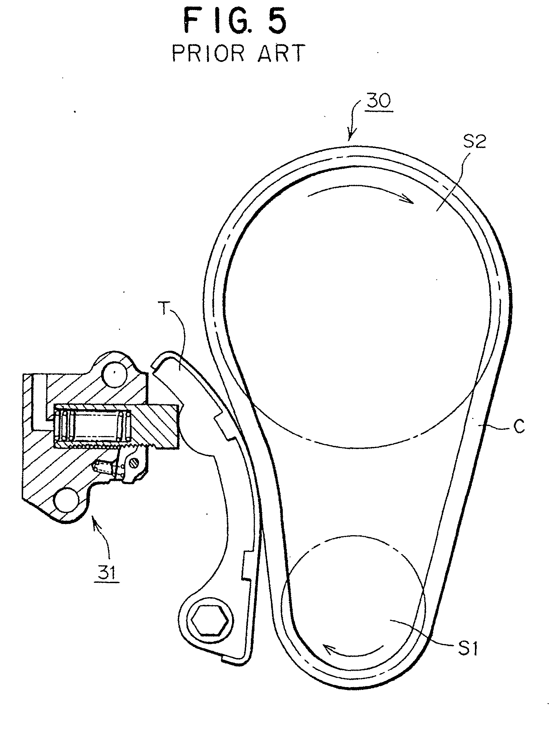

Fig. 5 shows a chain drive system 30. This chain drive system 30 includes a timing chain C that transmits power between a crank sprocket S1 and a cam sprocket S2, and a ratchet-operated tensioner 31 that imparts proper tension by pressing a tensioner lever T against the timing chain C.

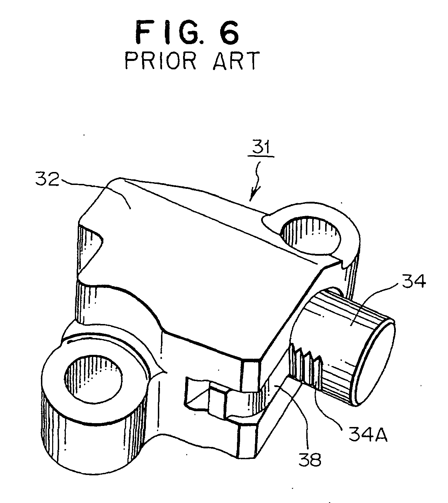

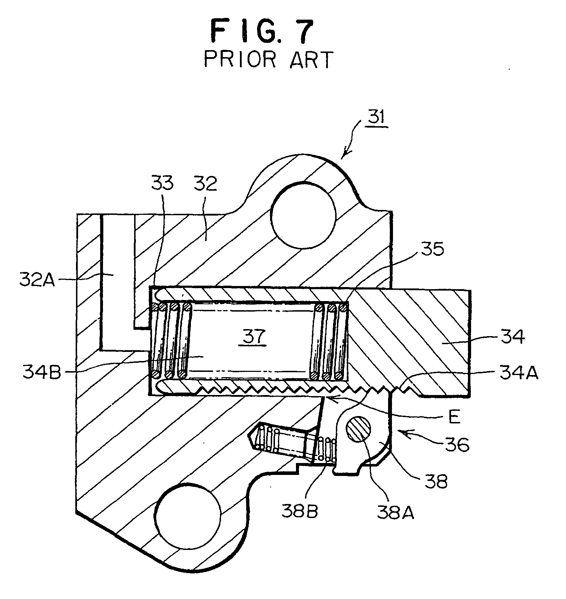

The ratchet-operated tensioner 31 is comprised of a plunger 34 slidably fitted into a cylinder chamber 33 formed in a tensioner body 32 so that the front end portion of the plunger 34 is protruded through the tensioner body 32 by being spring-biased by an compression spring 35, and a ratchet mechanism 36 that blocks a backward displacement of the plunger 34, as shown in Figs. 6 and 7.

In the inside of the plunger 34 is formed a hollow portion 34B with the rear end portion opened, and this hollow portion 34B and the cylinder chamber 33 form a pressure oil chamber 37. The bottom of the cylinder chamber 33 has an opened oil flow-in path 32A formed in the tensioner body 32. To the pressure oil chamber 37 is introduced oil supplied by an oil pump (not shown) driven by power transmitted by the rotation of the engine through the oil flow-in path 32A. Further, in this pressure oil chamber 37 is accommodated the compression spring 35 that protrudes the front end portion of the plunger 34 outside the tensioner body 32.

The ratchet mechanism 36 is formed so that it is pivotably supported on the tensioner body 32 about a shaft 38A and a ratchet body 38 biased with a compression spring 38B for the ratchet body engages with ratchet teeth 34A provided on a side of the outer periphery of the plunger 34, whereby the plunger 34 is not excessively moved backward beyond backlash limits.

In the thus formed ratchet-operated tensioner 31, while the engine is rotated and then the oil pump is driven, oil is supplied to the pressure oil chamber 37. When a running chain C is loosened the plunger 34 is protruded by the compression spring 35 to press the tensioner lever T whereby tension is imparted to the running chain C and at the same time the vibration during the running of chain is prevented.

When the tensioner lever T receives reaction and shock under tension after the loosening of the running chain, the plunger 34 is pressed into the cylinder chamber 33 against the bias force of the compression spring 35. This shock is however absorbed and relaxed by the oil damper effect due to the oil pressure in the pressure oil chamber 37. In this case the oil damper effect is exerted within backlash limits. However, when the plunger 34 is likely to move backward beyond the backlash limit, backward movement of the plunger 34 is blocked by engagement of the ratchet teeth 34A with the ratchets of the ratchet body 38.

When an abrasion elongation of the chain occurs due to long driving and the plunger 34 protrudes from the tensioner body 32 beyond the backlash limit, the engagement of the ratchet teeth 34A of the plunger 34 with the ratchets of the ratchet body 38 is shifted by one tooth of the ratchet teeth so that the plunger 34 is moved to the outside of the tensioner body 32 according to elongation of the chain. As a result the ratchet-operated tensioner 31 always keeps a proper pressing force against the chain.

Since in a conventional ratchet-operated tensioner the plunger is slidably fitted into the cylinder chamber, oil leaks from a clearance (small gap) between the cylinder chamber and the plunger. However, while the engine is rotated and oil is supplied from the oil pump, the pressure oil chamber is filled with the oil. Thus the oil damper effect due to the oil pressure is obtained and no significant problems occur. However, when for example a certain time has passed due to parking (in the case of a vehicle) in a case where oil has not been supplied from the oil pump at engine's shutdown, oil leaks through a small gap between the cylinder chamber and the plunger and the inside of the pressure oil chamber is emptied. Then when the engine is started much time take till the pressure oil chamber is filled with oil, and during that time the oil damper effect due to the oil pressure cannot be obtained. As a result there are problems in that a hit sound due to the protrusion or return of the plunger occurs resulting in occurrence of noise from the tensioner body although for a few seconds to ten and a few seconds after starting the engine and at the same time the chain's tension cannot be kept.

To solve such problems preventing oil from leaking through a clearance between the cylinder chamber and the plunger has been performed by providing an O-ring on an outer periphery of the plunger in a hydraulic tensioner including no ratchet mechanism so that the oil leak from the pressure oil chamber may be prevented. However, in a ratchet-operated tensioner since ratchet teeth are provided on the outer periphery of the plunger, it is difficult to place the O-ring on a proper position. Further, even if the ratchet-operated tensioner including the ratchet mechanism has the O-ring placed on the outer periphery of the plunger, the O-ring is caught by an edge (see E in Fig. 7) of a recess provided for placing the ratchet body on fitting the plunger into the cylinder chamber during the assembly of the ratchet-operated tensioner, and a problem arises in that the O-ring is scratched.

US-A-5 720 684 discloses a ratchet-operated tensioner according to the preamble of claim 1.

An object of the present invention is to solve the problems of the above-mentioned prior art and to provide a ratchet-operated tensioner with a pressure oil chamber in which the oil leak from the pressure oil chamber is prevented by preventing the oil leak from a gap between a principal plunger and an inner plunger so that the pressure oil chamber can always be filled with oil.

This object is achieved by the features of claim 1.

To attain the above-mentioned object there is provided a ratchet-operated tensioner with a pressure oil chamber including a principal plunger slidably fitted into a cylinder chamber formed in a tensioner body so that a front end portion of the plunger is protruded out of the tensioner body with a spring biased, an inner plunger slidably fitted into the inside of said principal plunger, a pressure oil chamber formed by the inside of the principal plunger and the inside of the inner plunger, a compression spring provided in said pressure oil chamber for spring-biasing the principal plunger and a ratchet mechanism that blocks a backward displacement of the principal plunger, wherein a bottom plate having an oil introduction hole for introducing oil supplied from an oil flow-in path formed in the tensioner body to the pressure oil chamber is formed on said inner plunger and an O-ring that slidably comes into contact with the inner wall of the principal plunger is attached to an outer periphery of the inner plunger.

According to the present invention it is preferred that a slit is formed on an outer periphery of the principal plunger in a longitudinal direction. Further, it is preferred that a check valve that permits a flow-in of oil into the pressure oil chamber but blocks backflow of oil is provided in the vicinity of the oil introduction hole in the inner plunger.

In the ratchet-operated tensioner of the present invention when oil is not supplied from an oil pump according to the engine's shutdown, the oil leak through a gap between the principal plunger and the inner plunger is prevented by providing an O-ring in the inner plunger. Thus, even if a certain time has passed no pressure oil chamber is emptied due to no leakage from the pressure oil chamber. As a result the pressure oil chamber is always filled with oil, and at the time of restarting the engine after an engine's shutdown an oil damper effect due to the oil pressure can be obtained immediately, and at the same time noise from a tensioner body does not occur and the tension of the chain is maintained whereby a chain drive system is quietly operated.
- Fig. 1: is a cross-sectional view of a ratchet-operated tensioner of Example 1 according to the present invention;
- Fig. 2: is an explanatory view of the position of an O-ring disposition in the ratchet-operated tensioner;
- Figs. 3 (A) and 3(B): show a ratchet-operated tensioner of Example 2 according to the present invention, particularly, Fig. 3(A) is a cross-sectional view of a principal plunger before being protruded and Fig. 3(B) is a cross-sectional view of a protruded principal plunger;
- Fig. 4: is a cross-sectional view of a ratchet-operated tensioner of Example 3 according to the present invention;
- Fig. 5: is an explanatory view of a chain drive system according to the present invention;
- Fig. 6: is a perspective view of a conventional ratchet-operated tensioner; and
- Fig. 7: is a cross-sectional view of the conventional ratchet-operated tensioner.

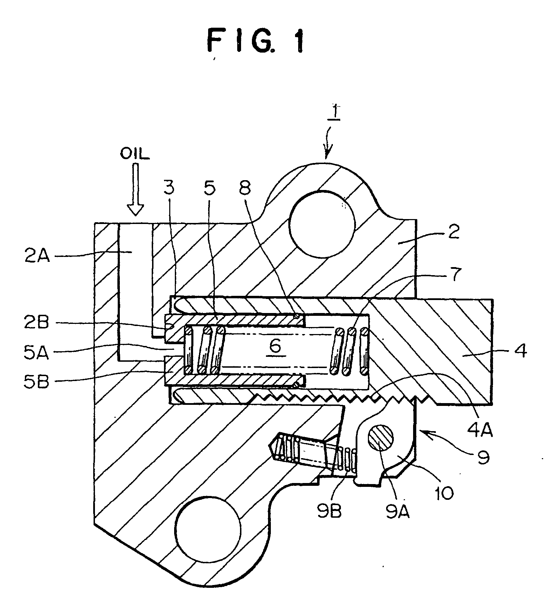

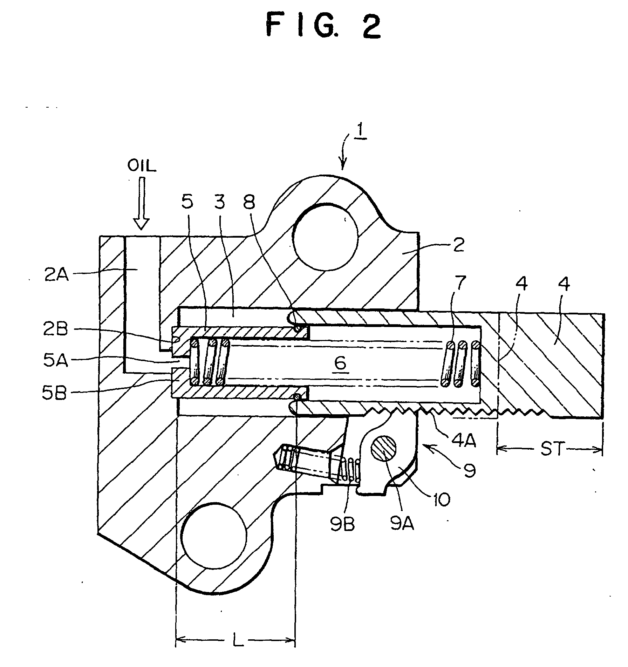

An embodiment of the present invention will now be described with reference to Figs. 1 and 2 based on Example 1. Fig. 1 shows a cross-sectional view of a ratchet-operated tensioner 1. In this tensioner 1, a principal plunger 4 having a hollow portion with a rear end portion opened is slidably fitted into a cylinder chamber 3 formed in a metallic tensioner body 2 so that a front end portion is protruded outside from the tensioner body 2 with the principal plunger 4 spring-biased. Further, the principal plunger 4 slidably fits to the outside of an inner plunger 5 having a hollow portion with a front end portion opened. That is the inner plunger 5 is slidably fitted into the interior of the principal plunger 4.

In the rear end portion of the inner plunger 5 is formed a bottom plate 5B having an oil introduction hole 5A at a position corresponding to an oil flow-in path 2A formed in the tensioner body 2. The fitting of this inner plunger 5 into a cylindrical groove 2B formed on the bottom portion of the cylinder chamber 3 causes the oil flow-in path 2A to communicate with the oil introduction hole 5A. To seal a portion between the principal plunger 4 and the inner plunger 5 an O-ring 8 that slidably comes into contact with an inner wall of the principal plunger 4 is attached to an outer periphery of the front end portion of the inner plunger 5.

As described above by fitting the inner plunger 5 into the principal plunger 4 the inside of the principal plunger 4 and the inside of the inner plunger 5 form a pressure oil chamber 6 with the respective hollow portions. Further, as described above, the communication of the oil flow-in path 2A with the oil introduction hole 5A causes oil pressurized by an oil pump (not shown) from the outside of the tensioner body 2 to be introduced through the oil flow-in path 2A and the oil introduction hole 5A.

Further, a compression spring 7 is provided in this pressure oil chamber 6. This compression spring 7 biases or urges the principal plunger 4 so that the front end portion of the principal plunger 4 is protruded outside the tensioner body 2 while the compression spring 7 biases the bottom plate 5B of the inner plunger 5 downward. In this case, when the ratchet-operated tensioner 1 is disposed on an engine, a drive or the like the principal plunger 4 is pressed in the cylinder chamber 3 by a tensioner lever (see Fig. 5) that abuts on a chain so that the falling out or removal of the principal plunger is prevented. Further, by the pressing of the principal plunger 4 in the cylinder chamber 3 the compression spring 7 biases the bottom plate 5B of the inner plunger 5 so that the inner plunger 5 is fitted and secured into the groove 2B formed in the bottom portion of the cylinder chamber 3. As described above, since the inner plunger 5 is secured by the use of the compression spring, another member that secures the inner plunger 5 is not needed and a production and an assembly of the ratchet-operated tensioner can be easily performed.

Further, a ratchet mechanism 9 that blocks backward shifting of the principal plunger 4 is provided in the tensioner body 2. The ratchet mechanism 9 comprises ratchet teeth 4A provided on the peripheral surface of the principal plunger 4 and a ratchet body 10 pivoted on the tensioner body 2. The ratchet body 10 is spring-biased so as to engage with the ratchet teeth 4A. In this case, there is a backlash between the ratchet teeth 4A and the ratchets of the ratchet body 10. The forward movement (protrusion) of the principal plunger 4 beyond the backlash limits is possible, but its backward movement beyond the backlash limits is blocked by the engagement of the ratchet teeth 4A with the ratchets of the ratchet body 10 so that the plunger 4 is not excessively moved backward. It is noted that the reference numeral 9A denotes a shaft or a pin and the reference numeral 9B denotes a compression spring in Figs. 1 and 2.

The action of the ratchet-operated tensioner 1 is as follows. The inside of the pressure oil chamber 6 is always filled with oil supplied by an oil pump provided outside the tensioner body 2. Loosening of a running chain causes the principal plunger 4 to be protruded by the compression spring 7 to press the tensioner lever against the chain so that tension is imparted to the running chain and at the same time vibrations during chain's running are prevented.

When the tension lever receives a reaction and a shock due to the tension received after the loosening of a running chain, the plunger 4 is pressed into the cylinder chamber 3 against the bias force of the compression spring 7. Accordingly, the oil pressure in the pressure oil chamber 6 is further increased. Then the shock energy is absorbed by the fluid resistance of oil that leaks through a small gap between the O-ring 8 attached inner plunger 5 and the principal plunger 4. As a result the ratchet-operated tensioner relaxes the shock by an oil damper effect due to the oil pressure in the pressure oil chamber 6.

Further, when an abrasion elongation of the chain occurs after the long driving and the principal plunger 4 then protrudes out of the tensioner body 2 beyond the backlash limit, the engagement of the ratchet teeth 4A of the principal plunger 4 with the ratchets of the ratchet body 9 is shifted by one tooth and the principal plunger 4 is moved outside the tensioner body 2 according to the elongation of the chain so that it keeps proper force against the chain.

It is noted that Fig. 2 shows a state where the principal plunger 4 was best moved outside the tensioner body 2 by elongation of the chain. As can be seen from Fig. 2 the length of the principal plunger 4 and the length of the inner plunger 5 are determined in consideration of the oil damper effect of the ratchet-operated tensioner 1. However, in this case, a distance L to the set position of the O-ring 8 must be at least the same length as a required stroke ST for the principal plunger 4 or must be further lengthened than that.

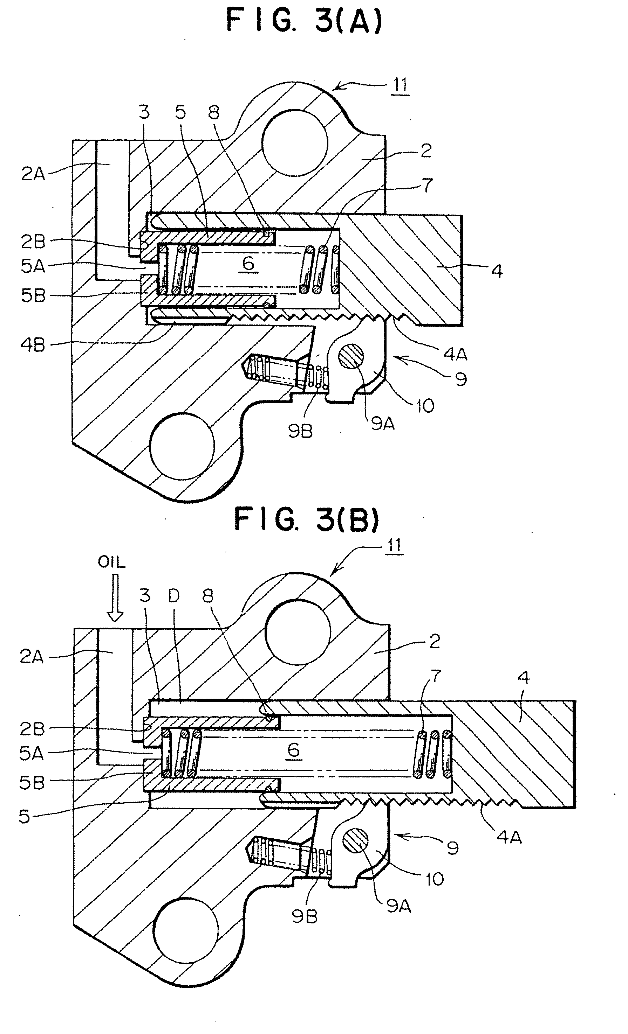

Explanations of Example 2 will be given with reference to Figs. 3(A) and 3(B). A ratchet-operated tensioner 11 of Example 2 is different from the ratchet-operated tensioner 1 of Example 1 in that a slit 4B is formed on an outer periphery of the principal plunger 4. Thus this different point is principally described. The same members are merely denoted as the same reference numerals in Example 1 and their detailed descriptions are omitted.

Since the O-ring 8 is provided on an outer periphery of the inner plunger 5 as shown in Fig. 3(B), when the principal plunger 4 is protruded out of the cylinder chamber 3, an annular gap D between the cylinder chamber 3 and a rear end portion of the principal plunger 4 reaches negative pressure. Thus, when the running chain looses the protrusion timing when the principal plunger 4 is protruded out of the tensioner body 2 by the compression spring 7 is delayed. As this problem-solving means, according to the present example a slit 4B is formed on the outer periphery of the principal plunger 4 in a longitudinal direction so as to be continued to the ratchet teeth 4A, which allows ventilation between the annular gap D and the outside of the tensioner body 2.

As described above, in the example the slit 4B is formed around the principal plunger 4 so as to be continued to the ratchet teeth 4A. Accordingly, when the running chain loosens and is out of from the running line whereby the principal plunger 4 is protruded out of the tensioner body 2 by the compression spring 7, it is prevented that the annular gap D between the cylinder chamber 3 and the rear end portion of the principal plunger 4 reaches negative pressure. As a result a response to the chain's looseness becomes better and the protrusion operation of the principal plunger 4 can be quickly performed. Thus, a delay in the protrusion timing is prevented and proper tension can be always imparted to the running chain.

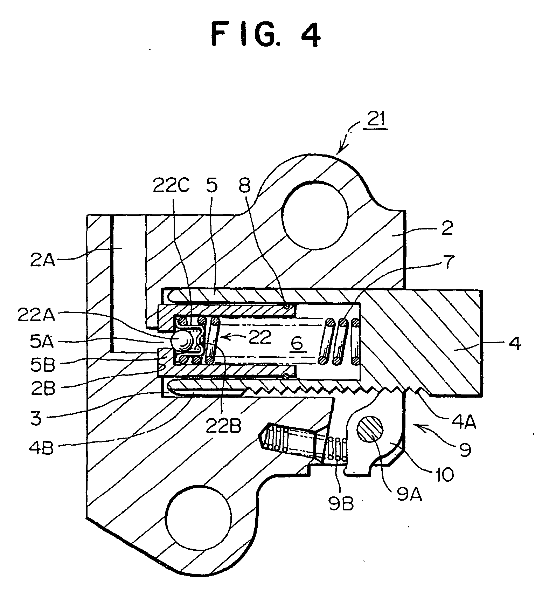

Example 3 will be described with reference to Fig. 4. A ratchet-operated tensioner 21 of Example 3 is different from the ratchet-operated tensioners of Examples 1 and 2 in that it is the ratchet-operated tensioner 1 of Example 1 or the ratchet-operated tensioner 11 of Example 2 provided with a check valve 22. Therefore, this different point will be mainly described. The same members as in Examples 1 and 2 are merely denoted as the same reference numerals and the detailed descriptions are omitted.

The ratchet-operated tensioner 21 has a pressure oil chamber 6 formed of the inside of a principal plunger 4 and the inside of an inner plunger 5. The inside of this pressure oil chamber 6 is provided with the check valve 22.

This check valve 22 is formed above a bottom plate 5B of the inner plunger 5 and includes a check ball 22A provided so as to close an oil introduction hole 5A formed in the bottom plate 5B of the inner plunger 5 from above, a spring 22B that biases the check ball 22A and a retainer 22C that supports the spring 22B. The check valve 22 allows the flowing of oil into the pressure oil chamber 6, but blocks backflow of the oil.

Oil supplied with an external oil pump is supplied into the pressure oil chamber 6 through an oil flow-in path 2A, the oil introduction hole 5A and the check valve 22, and the pressure oil chamber 6 is filled with oil. When a running chain is loosened the principal plunger 4 is protruded by the compression spring 7 and the tensioner lever T is pressed against the chain. In this case, the oil pressure from the oil pump opens the check valve 22.

When the tensioner lever T receives a reaction and a shock due to the tension received after the loosening of a running chain, the plunger 4 is pressed into the cylinder chamber 3 against the bias force of the compression spring 7. However, the check valve 22 is closed by closing the oil introduction hole 5A with the check ball 22A that forms the check valve 22. Accordingly, the oil pressure in the pressure oil chamber 6 is further increased. As a result the ratchet-operated tensioner relaxes the shock by an oil damper effect due to the oil pressure in the pressure oil chamber 6.

In a case where the ratchet-operated tensioner 21 formed as described above is attached to the engine, the drive or the like, since the principal plunger 4 provided such that the front end portion of the plunger 4 is protruded from the tensioner body 2 of the tensioner is pressed against the chain so that it is pressed into the cylinder chamber 3, the compression spring 7 always biases the bottom plate 5B of the inner plunger 5 through the retainer 22C of the check valve 22 and the inner plunger 5 is fitted and secured into the groove 2B formed on a bottom portion of the cylinder chamber 3.

Thus, the constitutions and effects of the ratchet-operated tensioners of Examples 1 to 3 were described. However, when the oil supply from the oil pump is stopped according to the stop of engine in the ratchet-operated tensioners 1, 11 and 21, oil leak through a gap between the principal plunger 4 and the inner plunger 5 is prevented by attachment of the O-ring 8 to the inner plunger 5. Thus even if a certain time has passed it can be prevented that oil in the pressure oil chamber 6 leaks and is emptied. As a result the pressure oil chamber 6 of the ratchet-operated tensioner 1, 11 or 21 is always filled with oil, and at the restarting of the engine after the engine's shutdown the oil damper effect due to the oil pressure can be immediately obtained and at the same time hitting noise due to the protrusion and backing of the plunger does not occur and the noise occurrence from the tensioner body 2 can be prevented. Further, since the oil damper effect can be immediately obtained even at the restarting of the engine after the engine's shutdown, the tension of the chain can be always maintained and the chain drive system can be quietly operated.

Further, in a case where the ratchet-operated tensioner 21 includes the check valve 22, a further effective oil damper effect due to the oil pressure can be obtained as in Example 3.

In Examples 1 to 3 of the present invention the case where tension was imparted to the chain by the ratchet-operated tensioner with the pressure oil chamber was described. However, the ratchet-operated tensioner with the pressure oil chamber according to the present invention is also used in a case where the tension is imparted to the running chain.

As described above, according to the present invention the ratchet-operated tensioner includes a principal plunger slidably fitted into a cylinder chamber formed in a tensioner body such that a front end portion of the principal plunger is protruded out of the tensioner body by spring bias and an inner plunger slidably fitted into the principal plunger, and a bottom plate having an oil introduction hole for introducing oil supplied through an oil flow-in path formed in the tensioner body to the pressure oil chamber is formed on the inner plunger and at the same time an O-ring that slidably comes into contact with the inner wall of the principal plunger is attached to an outer periphery of the inner plunger. Thus, in a case where the engine is stopped to stop the oil supply from the oil pump, since the O-ring 8 is attached to the inner plunger 5 an oil leak from the pressure oil chamber is prevented, and even if a certain time has passed it can be prevented that oil in the pressure oil chamber 6 leaks whereby the pressure oil chamber 6 is emptied.

As a result, according to the ratchet-operated tensioner the pressure oil chamber is always filled with oil. At the restarting of the engine after the engine's shutdown it is possible to immediately obtain the oil damper effect due to the oil pressure, and at the same time hitting noise due to the protrusion and backing of the plunger does not occur whereby the noise occurrence from the tensioner body can be prevented. Further, at the restarting of the engine after the engine's shutdown it is possible to obtain the oil damper effect due to the oil pressure, tension of the chain can be always maintained whereby a chain drive system can be quietly operated.

In a case where a slit is formed around the principal plunger in a longitudinal direction, when the principal plunger is protruded outside the tensioner body by the compression spring it can be prevented that the annular gap D between the cylinder chamber and the rear end portion of the principal plunger 4 reaches negative pressure. As a result since the protrusion operation of the principal plunger can be rapidly executed, a delay of the protrusion timing is prevented and proper tension can be always imparted to a running chain.

In a case where a check valve that permits the flowing of oil into the pressure oil chamber but blocks backflow of the oil is provided in the vicinity of oil introduction hole in the inner plunger the oil damper effect due to further effective oil pressure can be obtained.

According to the present invention even when the plunger body is made of plastic or the like having large dimensional accuracy or large dimensional deformation to temperature, the oil damper effect can be obtained by the inner plunger and the principal plunger.

## Claims

1. A ratchet-operated tensioner (1; 11; 21) with a pressure oil chamber (6) including a principal plunger (4) slidably fitted into a cylinder chamber (3) formed in a tensioner body (2) so that a front end portion of said principal plunger (4) is protruded out of the tensioner body (2) with a spring biased, an inner plunger (5) slidably fitted into the inside of said principal plunger (4), said pressure oil chamber (6) being formed by the inside of said principal plunger (4) and the inside of said inner plunger (5), a compression spring (7) provided in said pressure oil chamber (6) for spring-biasing said principal plunger (4) and a ratchet mechanism (9) that blocks a backward displacement of the principal plunger (4),
wherein a bottom plate (5B) having an oil introduction hole (5A) for introducing oil supplied from an oil flow-in path (2A) formed in said tensioner body (2) to said pressure oil chamber (6) is formed on said inner plunger (5), and **characterized in that** an O-ring (8) that slidably comes into contact with the inner wall of said principal plunger (4) is attached to an outer periphery of said inner plunger (5).

2. The ratchet-operated tensioner (11) with a pressure oil chamber (6) according to claim 1, wherein a slit (4B) is formed on an outer periphery of said principal plunger (4) in a longitudinal direction.

3. The ratchet-operated tensioner (21) with a pressure oil chamber (6) according to claim 1 or 2, wherein a check valve (22) that permits a flow-in of oil into said pressure oil chamber (6) but blocks backflow of oil is provided in the vicinity of the oil introduction hole (5A) in said inner plunger (5).

## Patentansprüche

1. Ein sperrklinkenbetätigter Spanner (1; 11; 21) mit einer Öldruckkammer (6), der einen verschiebbar in einer in einem Spannerkörper (2) ausgebildeten Zylinderkammer (3) eingepassten Haupt-Plungerkolben (4), so dass ein vorderer Endbereich des besagten Haupt-Plungerkolbens (4) mittels einer Feder vorgespannt über den Spannerkörper (2) vorsteht, einen im Inneren des Haupt-Plungerkolbens (4) verschiebbar angeordneten inneren Plungerkolben (5), wobei besagte Öldruckkammer (6) durch das Innere des Haupt-Plungerkolbens (4) und das Inneren des inneren Plungerkolbens (5) gebildet ist, eine Druckfeder (7), die in besagter Öldruckkammer (6) vorgesehen ist, um besagten Haupt-Plungerkolben (4) vorzuspannen, und einen Klinkenmechanismus (9) umfasst, der ein rückwärtiges Verschieben des Haupt-Plungerkolbens (4) verhindert,
wobei eine Bodenplatte (5B) an besagtem inneren Plungerkolben (5) ausgebildetet ist, die eine Öleinlassöffnung (5A) zum Einlassen von Öl aufweist, das von einer in besagtem Spannerkörper (2) ausgebildeten Ölversorgungsleitung (2A) der Öldruckkammer (6) zur Verfügung gestellt wird,
und **dadurch gekennzeichnet ist, dass** ein O-Ring (8), der gleitend in Kontakt mit der Innenwand des besagten Haupt-Plungerkolbens (4) kommt, an einem äußeren Umfang des besagten inneren Plungerkolbens (5) angebracht ist.

2. Der sperrklinkenbetätigte Spanner (11) mit einer Öldruckkammer (6) nach Anspruch 1, wobei ein Schlitz (4B) an einem äußeren Umfang des besagten Haupt-Plungerkolbens (4) in einer Längsrichtung ausgebildet ist.

3. Der sperrklinkenbetätigte Spanner (21) mit einer Öldruckkammer (6) nach Anspruch 1 oder 2, wobei ein Rückschlagventil (22), das ein Einströmen von Öl in besagte Öldruckkammer (6) ermöglicht, aber einen Rückfluss von Öl verhindert, in einer Höhlung der Öleinlassöffnung (5A) in besagtem inneren Plungerkolben (5) vorgesehen ist.

## Revendications

1. Tendeur (1 ; 11 ; 21) à cliquet de verrouillage, comportant une chambre d'huile sous pression (6) incluant un piston principal (4) coulissant dans une chambre cylindrique (3) formée dans le corps (2) du tendeur, de telle manière qu'une partie du haut dudit piston principal (4) dépasse dudit corps du tendeur (2) avec un ressort chargé en compression, un piston interne (5) coulissant à l'intérieur dudit piston principal (4), ladite chambre d'huile sous pression (6) étant formée par l'intérieur dudit piston principal (4) et l'intérieur dudit piston interne (5), un ressort de pression (7) placé dans ladite chambre d'huile sous pression (6) pour comprimer par sa charge ledit piston principal (4) et, un mécanisme de verrouillage à cliquet (9) qui empêche le recul du piston principal (4),
où ledit piston interne (5) comporte un trou d'introduction d'huile (5A) pratiqué dans son fond (5B) pour permettre l'introduction de l'huile amenée à ladite chambre d'huile sous pression (6) par une voie d'écoulement d'huile (2A) pratiquée dans ledit corps du tendeur (2), et **caractérisé en ce qu'**un joint torique d'étanchéité (8), qui glisse en contact avec la paroi intérieure dudit piston principal (4), est fixé sur la surface extérieure dudit piston interne (5).

2. Tendeur (11) à cliquet de verrouillage comportant une chambre d'huile sous pression (6) selon la revendication 1, où une fente (4B) est pratiquée dans la surface extérieure dudit piston principal (4), dans le sens longitudinal.

3. Tendeur (21) à cliquet de verrouillage comportant une chambre d'huile sous pression (6) selon la revendication 1 ou 2, où un clapet antirefouleur (22), qui permet à l'huile de s'écouler dans ladite chambre d'huile sous pression (6) mais empêche l'huile de refluer, est installé à proximité du trou d'introduction d'huile (5A) dudit piston interne (5).
